# FASCICULE DE BREVET EUROPEEN

(11) **EP 2 355 214 B1**
(45) Date de publication et mention de la délivrance du brevet: **25.12.2013**
(21) Numéro de dépôt: 10151986.6
(22) Date de dépôt: 28.01.2010
(51) Int. Cl.: H01M 4/58, H01M 4/62, H01M 4/04, H01M 10/0525, H01M 4/139, C01G 49/00, C01G 53/00

(54) **Accumulateurs au lithium à base de phosphate de fer lithié et de carbone**
Lithium-Akku auf Lithiumeisenphosphat und Kohlenstoffbasis
Lithium accumulators based on lithiated iron phosphate and carbon

(43) Date de publication de la demande: 10.08.2011
(73) Titulaire: PRAYON, B-4480 Engis (BE); Commissariat A L'Energie Atomique - CEA, 75015 Paris (FR)
(72) Inventeur: PATOUX, Sébastien, 38600, FONTAINE (FR); MARTINET, Sébastien, 38210, St QUENTIN/ISERE (FR); LAUNOIS, Sébastien, 38100, GRENOBLE (FR); GOURGUE, Alain, 4287, LINCENT (BE); GERMEAU, Alain, 1160, AUDERGHEM (BE)
(74) Mandataire: Coulon, Ludivine

(56) Documents cités:
- EP-A1- 1 261 050
- EP-A2- 1 193 783
- EP-A2- 1 195 827
- WO-A1-2009/117871

## Description

L'invention se rapporte à un procédé de fabrication d'un matériau d'électrode composite comprenant du phosphate de fer lithié et du carbone, au matériau d'électrode susdit, ainsi qu'à un accumulateur au lithium comportant au moins deux électrodes à base de matériaux actifs différents, dont une est à base dudit matériau d'électrode composite comprenant du phosphate de fer lithié, et un électrolyte au travers duquel les cations Li⁺ ont la possibilité de migrer d'une électrode à l'autre en fonction de l'utilisation.

Les accumulateurs au lithium sont de plus en plus utilisés comme sources d'énergie autonome, en particulier, dans les équipements portables, où ils remplacent progressivement les accumulateurs nickel-cadmium (NiCd) et nickel-hydrure métallique (NiMH). Cette évolution s'explique par l'amélioration continue des performances des accumulateurs au lithium, leur conférant ainsi des densités d'énergie nettement supérieures à celles proposées par les filières NiCd et NiMH. Les nouvelles générations d'accumulateurs au lithium sont déjà en voie de développement pour des applications toujours plus diversifiées (automobile hybride ou tout électrique, stockage de l'énergie de cellules photovoltaïques, ...).

Plus spécifiquement, les composés actifs d'électrodes utilisés dans les accumulateurs commerciaux sont, pour l'électrode positive, des composés lamellaires tels que LiCoO₂, LiNiO₂ et les mixtes Li(Ni,Co,Mn,Al)O₂ ou des composés de structure spinelle de composition proche de LiMn₂O₄. L'électrode négative est généralement du carbone (graphite, coke,...) ou éventuellement le spinelle Li₄Ti₅O₁₂ ou un métal formant un alliage avec le lithium (Sn, Si, ...). Les capacités spécifiques théoriques et pratiques des composés d'électrode positive cités sont respectivement d'environ 275 mAh/g et 140 mAh/g pour les oxydes de structure lamellaire (LiCoO₂ et LiNiO₂) et 148 mAh/g et 120 mAh/g pour le spinelle LiMn₂O₄. Dans tous les cas une tension de fonctionnement par rapport au lithium métallique voisine de 4 Volts est obtenue.

Par les termes « capacité spécifique théorique », on entend, au sens de l'invention la capacité spécifique exprimée en mAh/g calculée par la formule théorique suivante : nombre de moles d'ions Li+ théoriquement échangées entre l'électrode positive et l'électrode négative (c'est-à-dire le nombre de moles d'ions Li+ théoriquement extraites de façon réversible du composé actif de l'électrode positive) multiplié par un faraday ( 96 500 C ) divisé par 3600 secondes et divisé par la masse molaire du composé en g/mole

Par les termes « capacité spécifique pratique », on entend, au sens de l'invention la capacité spécifique réelle mesurée en mAh par gramme du composé.

Depuis l'émergence des accumulateurs au lithium, plusieurs générations de matériaux d'électrodes ont successivement fait leur apparition [J.-M. Tarascon and M. Armand, Nature, 414 (2001) 359-367 : Issues and challenges facing rechargeable lithium batteries]. Le concept d'insertion/extraction de lithium dans/depuis des matériaux d'électrodes a été étendu il y a quelques années aux structures tridimensionnelles construites à partir d'entités polyanioniques de type XOₙ^{m-} (X = P, S, Mo, W...), de telle sorte que les matériaux de structure de type olivine par exemple suscitent actuellement un réel engouement. A titre d'exemple, le brevet FR2848205 revendique l'utilisation de phosphate de fer lithié dopé au bore comme matériau actif de l'électrode positive, tel que LiFe_{0,95}B_{0,033}PO₄.

Pour répondre aux nouveaux marchés de l'automobile hybride et électrique, et du solaire photovoltaïque, par exemple, la filière des accumulateurs Li-ion, généralement basée sur le couple LiCoO₂/graphite (électrode positive/électrode négative), devra être modifiée. Les contraintes de coût et de volume de production, de performances en puissance et de sûreté imposent l'abandon, entre autres, du composé actif d'électrode positive LiCoO₂ (et ses dérivés) utilisé jusqu'à présent. Dans cette optique, le phosphate de fer et de lithium ou phosphate de fer lithié LiFePO₄ et ses dérivés, de structure de type olivine, s'imposent actuellement comme une alternative à LiCoO₂ et aux autres oxydes lamellaires et spinelles conventionnels en tant que matériau d'électrode positive d'accumulateurs Li-ion. Ils sont déjà utilisés depuis quelques années dans certains accumulateurs commerciaux d'outillages portatifs. Malgré leurs atouts, ces phosphates de fer ne permettent pas encore d'atteindre des densités d'énergie élevées. Les performances annoncées font état de 100 à 120 Wh/kg à l'échelle de la cellule Li-ion (c'est-à-dire un accumulateur dans lequel l'ion lithium de la cathode s'échange de manière réversible et l'anode, via l'utilisation d'un électrolyte comprenant un sel de lithium) (électrode positive à base de LiFePO₄, et électrode négative à base de carbone), contre 160 à 180 Wh/kg pour une cellule conventionnelle (c'est-à-dire un accumulateur unique au lithium-oxyde de cobalt/carbone).

Il existe donc un besoin de produire un matériau d'électrode composite de phosphate de fer lithié et de carbone permettant d'atteindre une densité d'énergie pratique supérieure à 140 Wh/kg au niveau de la cellule Li-ion.

La présente invention se rapporte donc à un procédé de fabrication d'un matériau d'électrode composite de phosphate de fer lithié et de carbone comprenant les étapes de
- formation d'un mélange de précurseurs contenant au moins du phosphate de lithium, du phosphate de fer (II) et d'une matière contenant du carbone, sous atmosphère inerte,
- un broyage dudit mélange de précurseurs obtenu et
- une calcination dudit mélange broyé pendant lequel se produisent la pyrolyse de la matière contenant du carbone et la formation de cristaux de phosphate de fer lithié.

Un tel procédé est par exemple connu du document EP 1 195 827. Ce document enseigne un ajout de carbone, par exemple du noir de carbone ou du graphite) à n'importe quelle étape avant la calcination et d'effectuer une étape de compression entre le broyage et la calcination.

En outre, ce document enseigne un temps de broyage d'environ 10 heures, en fonction des différents matériaux de cathode fabriqués. Toutefois, une telle durée de broyage ne permet pas une réalisation industrielle du matériau d'électrode, en particulier au vu de la conjoncture actuelle qui tend à réduire les consommations d'énergie et les émissions de pollutions. Il existe donc un besoin de mettre au point un procédé de fabrication d'un matériau d'électrode moins énergivore et donc applicable industriellement tout en permettant d'atteindre des performances électrochimiques satisfaisantes telle que celle d'un matériau d'électrode composite de phosphate de fer lithié et de carbone permettant d'atteindre une densité d'énergie pratique supérieure à 140 Wh/kg au niveau de la cellule Li-ion.

Pour résoudre ce problème et donc obtenir un matériau d'électrode composite de phosphate de fer lithié et de carbone permettant d'atteindre une densité d'énergie supérieure à 140 Wh.kg, possible à fabriquer au niveau industriel, c'est-à-dire dont le procédé de fabrication permet une certaine rentabilité et qui est continu, il est nécessaire d'optimiser le procédé de fabrication du matériau composite pour ensuite pouvoir optimiser les étapes de fabrication des électrodes et des cellules électrochimiques.

A l'issue du procédé de fabrication, il est opportun d'obtenir un matériau composite d'électrode dont les caractéristiques physico-chimiques permettront la mise en forme des électrodes.

En effet, en plus d'être suffisamment rentable et donc faisable industriellement, le procédé selon l'invention doit permettre de réaliser des électrodes épaisses présentant une capacité surfacique élevée (en mAh/cm²). A titre d'exemple, on peut déduire des exemples décrits dans le brevet EP 1 195 827, une capacité surfacique comprise entre 0,5 et 1 mAh/cm², ce qui est insuffisant pour produire à partir de ce matériau composite d'électrode des cellules Li-ion de grande densité d'énergie. Cette dernière dicte ensuite les performances intrinsèques de l'accumulateur ; en particulier la densité d'énergie. A la différence de LiCoO₂, le composé LiFePO₄ n'est, par exemple, généralement pas adapté à la réalisation de telles électrodes.

Par les termes phosphate de fer lithié ou LiFePO₄, on entend d'une façon générale tout composé à base de phosphate de fer lithié, seul ou en mélange, ou encore substitué partiellement comme les phosphates de fer lithié dopés. Un exemple au sens de l'invention d'un tel phosphate de fer lithié dopé est le phosphate de fer lithié dopé au bore.

Il existe donc un besoin d'obtenir un matériau d'électrode composite permettant de réaliser des électrodes épaisses présentant une capacité surfacique élevée, pour fournir à la cellule électrochimique une densité d'énergie pratique élevée et dont le procédé de fabrication est faisable industriellement.

A cette fin, le procédé selon l'invention est caractérisé en ce que ledit broyage est un broyage à billes à haute énergie dans lequel la vitesse relative maximale des billes est supérieure à 4 m/s, de préférence supérieure à 6 m/s, et de manière plus préférentielle, supérieure à 8 m/s, de façon à conférer au mélange de précurseurs une énergie d'activation mécanique suffisante pour obtenir des agrégats mixtes micrométriques de particules nanométriques et en ce que le broyage présente une durée de moins de deux heures, de préférence de moins d'une heure.

Par les termes vitesse relative des billes, on entend, au sens de l'invention la vitesse linéaire des billes par rapport à un référentiel lié à l'enceinte de broyage, cette dernière pouvant être fixe ou en mouvement selon le type de broyeur.

Par les termes « broyage à billes à haute énergie »,ou « mécanosynthèse », « synthèse ou activation mécanochimique » ou encore « mechanical alloying », qui pourront être utilisés dans la présente description de manière interchangeable, on entend tout procédé dans lequel l'agitation de milieu de broyage (généralement des billes) produit des chocs conduisant non seulement à la fracturation des grains de poudre (obtention de particules nanométriques) mais également à leur ressoudure à l'échelle atomique par un mécanisme de type microforgeage ou soudage diffusion (formation d'agrégats mixtes micrométriques de particules nanométriques).

Lors du broyage à billes à haute énergie, le broyage confère donc à la poudre une énergie importante par unité de temps qui peut être estimée à 125 kJ/h par litre de poudre à broyer afin de réaliser la formation d'agrégats mixtes micrométriques de particules nanométriques en moins de deux heures tout en maintenant une capacité spécifique du matériau supérieure à 150 mAh/g à la fin du procédé.

Par les termes "agrégats mixtes micrométriques de particules nanométriques", on entend, au sens de l'invention des agrégats dont la taille moyenne (D50) mesurée par granulométrie laser est comprise entre 0,5 et 15 µm, dont la composition chimique à l'échelle de l'agrégat est identique d'un agrégat à l'autre, et constitués d'un assemblage soudé de particules de tailles nanométriques de l'ensemble des poudres du mélange de précurseurs à broyer.

Par les termes "particules nanométriques", on entend, au sens de l'invention des particules dont la taille maximale mesurée par microscopie en transmission est inférieure à 50 nm.

Un tel broyage est par exemple obtenu par un dispositif tel que décrit dans le brevet US 5,464,163. De cette façon, le broyage confère une énergie de broyage due aux collisions des particules et permet d'obtenir des particules nanométriques plus fines et essentiellement plus rapidement que dans les étapes de broyage conventionnel. Ces collisions permettent également de ressouder les particules nanométriques entre elles pour former des agrégats dont la taille dépend de l'équilibre statistique entre la fréquence d'occurrence des chocs « fracturants » et celle des chocs « ressoudant ».

De cette façon, les agrégats sont des agencements de poudre broyée particulièrement optimaux pour obtenir une mise en forme préalable qui permettra dans une étape ultérieure une fabrication d'électrodes plus épaisses que celles de l'état de la technique. De cette façon, puisque les deux facteurs (densité de poudre tapée et épaisseur) atteignent des valeurs optimales, la capacité surfacique qui dépend linéairement de leur produit est forcément également optimale et en tout cas bien supérieure à celles décrites dans les diverses publications sur le sujet.

En effet, la capacité surfacique (qui est le résultat du produit de la capacité spécifique en mAh/g par la densité tapée en g/cm³ et l'épaisseur de l'électrode en cm) est considérée satisfaisante lorsque la densité en g/cm³ et l'épaisseur d'électrode atteignent toutes deux des optima. La capacité surfacique sera considérée comme satisfaisante lorsqu'elle est supérieure à 2 mAh/cm², de préférence supérieure à 3 mAh/CM². meilleures performances tant au niveau de l'électrode qu'au niveau de la cellule et sont en outre produites par un procédé bien moins énergivore, qui demande des temps de broyage réduit (par exemple de 10 heures à moins de deux heures) car le rendement énergétique de broyage pour un broyeur à billes dont la vitesse relative maximale du milieu de broyage et donc des billes est supérieure à 4 m/s, de préférence, à 6 m/s et de manière plus préférentielle à 8 m/s est supérieur aux broyeurs conventionnels.

Cette vitesse relative élevée permet notamment de générer des chocs d'énergie suffisante pour éviter à la poudre de former des dépôts (colmatage) sur les éléments du milieu de broyage (parois de l'enceinte de broyage, billes et le cas échéant bras ou pales d'agitation). La constitution de tels dépôts réduit considérablement l'efficacité du broyage pour les raisons suivantes :
- la quantité de poudre libre diminuant, le nombre de chocs bille/bille ou bille/paroi sans grains de poudre augmente, ce qui accroît la part de dissipation thermique générée par les chocs
- les poudres piégées dans de tels dépôts reçoivent moins d'énergie mécanique que les poudres restées libres car les dépôts peuvent dissiper une partie de l'énergie des chocs (par amortissement ou transmission aux substrats)
- les poudres piégées dans de tels dépôts sont difficilement récupérables et nécessitent généralement une intervention manuelle, ce qui réduit considérablement le temps d'utilisation effectif du broyeur ou à défaut limite la quantité de poudre récupérée.

Dans une forme de réalisation préférentielle du procédé selon l'invention, ladite étape de broyage est réalisée pendant moins d'une demi-heure et de préférence pendant environ 15 minutes, ce qui permet d'améliorer encore l'impact environnemental et énergivore du procédé selon l'invention. d'améliorer encore l'impact environnemental et énergivore du procédé selon l'invention.

Avantageusement, ladite étape de calcination présente une durée de moins de 2 heures, de préférence de moins d'une heure et de manière plus préférentielle de moins d'une demi-heure.

De ceci, il ressort qu'en plus de permettre une étape de broyage sensiblement raccourcie, plus rentable d'un point de vue rendement énergétique, l'effet obtenu sur la finesse des grains du matériau d'électrode avant calcination permet également de réduire drastiquement la durée de l'étape de calcination aboutissant de cette façon à un procédé de fabrication complet encore moins polluant et encore moins énergivore. Rappelons à toutes fins utiles que nombres de procédé de calcination présentent des durées sensiblement égales à une période de temps comprise entre 5 et 10 heures.

Dans une forme de réalisation préférentielle du procédé selon l'invention, ledit mélange de précurseurs contient aussi du phosphate de bore et ledit matériau composite de phosphate de fer lithié et de carbone est un matériau composite de phosphate de fer lithié dopé au bore et de carbone.

Dans ce cas, la formule du produit obtenu est de préférence LiFe_{β}B_{γ}PO₄/C avec 0 < γ/β ≤ 0,1 et γ + β <1

Le bore est alors inséré dans la structure cristalline du LiFePO₄ en substitution d'une partie des atomes de fer, créant de ce fait quelques lacunes cationiques au sein du matériau (γ + β < 1 ). Cette modification structurale du LiFePO₄ entraîne une amélioration remarquable de la conductivité électrique du matériau.

Dans une forme de réalisation avantageuse selon l'invention, le procédé comprend avant la formation dudit mélange de précurseur, une étape de synthèse du phosphate de lithium par neutralisation de l'hydroxyde de lithium par de l'acide phosphorique, en milieu aqueux et à température ambiante, selon la réaction (I).

(I) 3 LiOH.H₂O + H₃PO₄→ Li₃PO₄ + 6 H₂O.

Par exemple, et de préférence, l'hydroxyde de lithium est obtenu par dissolution de l'hydroxyde de lithium dans l'eau, alors que l'acide phosphorique est ajouté petit à petit, à vitesse contrôlée et sous agitation. Le phosphate de lithium ainsi obtenu est alors décanté, filtré, lavé et ensuite séché.

A titre d'exemple, dans le procédé selon l'invention, ledit phosphate de fer (II) est synthétisé à température ambiante par réaction en milieu aqueux de sulfate de fer (II) avec du DSP (phosphate di-sodique), selon la réaction (II).

(II) 2 H₃PO₄ + 6 NaOH + 3 FeSO₄.7H₂O → Fe₃(PO₄)₂.8H₂O + 3 Na₂SO₄ + 19 H₂O.

Comme on peut le constater, le phosphate di-sodique est par exemple préparé *in situ* par neutralisation partielle de l'acide phosphorique par la quantité appropriée de soude caustique et une solution aqueuse de sulfate de fer (II) est ajoutée à vitesse contrôlée et sous agitation. De préférence, le pH est ajusté en continu par ajout de soude caustique. De manière plus préférentielle, le milieu réactionnel est maintenu sous agitation après addition des réactifs. Le précipité de phosphate de fer (II) ainsi obtenu est décanté, filtré, lavé et séché sous vide et la température du produit est maintenue en dessous de 60°C.

De manière particulièrement avantageuse, le procédé selon l'invention comprend un dégazage de l'eau par barbotage d'argon et un inertage de l'équipement utilisé afin d'éviter l'oxydation du fer (II) en fer (III). Par exemple, les cuves de réaction, le filtre sécheur pour sécher le précipité formé sont également placés sous atmosphère inerte à l'argon ou éventuellement à l'azote. consommé comme réducteur dans l'étape de calcination, et d'amener des composés impurs dans le matériau composite final obtenu, qui auraient des conséquences sur les capacités électrique du matériau composite.

Avantageusement, dans le procédé selon l'invention, la calcination est effectuée sous atmosphère inerte d'argon afin d'éviter le plus possible l'oxydation du phosphate de fer (II) sachant que des composés oxydants seront forcément relargués durant cette étape de calcination. La calcination a lieu de manière avantageuse à une température comprise entre 550°C et 800 °C et avantageusement d'environ 600°C pendant de 10 à 20 minutes et de préférence pendant 15 minutes. En tout état de cause, la température de calcination doit être inférieure à la température de fusion de l'un des précurseurs.

De manière préférentielle, ladite matière contenant du carbone est de la cellulose, ce qui permet, de par la nature de la source de carbone ajoutée lors de la synthèse, de limiter la croissance cristalline des grains de Life_{β}B_{γ}PO₄ et apporte une certaine porosité au matériau. En effet, la décomposition de la cellulose durant l'étape de calcination, de préférence très courte permet une répartition du carbone très homogène dans le matériau d'électrode composite ainsi obtenu et améliore de cette façon la conductivité et donc les performances électrochimiques du matériau composite d'électrode selon l'invention.

D'autres formes de réalisation du procédé selon l'invention sont mentionnées dans les revendications annexées.

La présente invention se rapporte également à un matériau d'électrode obtenu par le procédé selon l'invention présentant la formule suivante Li_{α}Fe_{β}B_{γ}PO₄/C dans laquelle 0,85 ≤ α ≤ 1,08, 0 ≤ γ/β ≤ 0,1 et γ + β ≤ 1, permettant à une capacité surfacique inférieure à 2 mAh/cm² de fournir une capacité spécifique pratique d'électrode comprise entre 150 et 170 mAh/g, de préférence entre 155 et 170 mAh/g et généralement comprise entre 155 et 165 mAh/g et à une capacité surfacique comprise entre 2 et 4 mAh/cm² de fournir une capacité spécifique pratique d'électrode supérieure à 150 mAh/g. ≤ α ≤ 1,08, 0 ≤ γ/β ≤ 0,1 et γ + β ≤1, permettant à une capacité surfacique inférieure à 2 mAh/cm² de fournir une capacité spécifique pratique d'électrode comprise entre 150 et 170 mAh/g, de préférence entre 155 et 170 mAh/g et généralement comprise entre 155 et 165 mAh/g et à une capacité surfacique comprise entre 2 et 4 mAh/cm² de fournir une capacité spécifique pratique d'électrode supérieure à 150 mAh/g.

La présente invention a donc permis d'obtenir à partir d'un procédé de fabrication enfin applicable industriellement un matériau composite d'électrode susceptible de fournir à l'électrode formée à partir de celui-ci une capacité surfacique élevée, grâce à la morphologie obtenue par le broyage à haute énergie, en particulier par la formation d'agrégats micrométriques de particules nanométriques. En effet, comme nous l'avons mentionné précédemment, pour obtenir une capacité surfacique élevée pour une électrode, il est important que ces deux valeurs tendent vers un maximum, ce qui est le cas avec le broyage avantageux selon l'invention qui est en outre moins énergivore que les procédés de broyage conventionnels.

Il a en effet été découvert de manière surprenante que l'étape de broyage selon l'invention de durée particulièrement courte (éventuellement combinée à l'étape de calcination également de durée très courte) permet d'obtenir une capacité spécifique pratique élevée. Bien que cette caractérisation de l'électrode soit une fonction directe du résultat obtenu, à l'heure actuelle, il n'est pas possible de déterminer à partir de quelle propriété spécifique du matériau d'électrode obtenu il a été possible d'obtenir ce résultat, bien que ceci provienne vraisemblablement de la morphologie des grains après broyage.

Avantageusement, le matériau d'électrode selon l'invention présente la formule suivante LiFe_{β}B_{γ}PO₄/C dans laquelle γ + β <1, en particulier LiFe_{0,95}B_{0,033}PO₄/C. De cette façon, le bore est inséré dans la structure cristalline du LiFePO₄ en substitution d'une partie des atomes de fer, créant de ce fait quelques lacunes cationiques au sein du matériau (γ + β < 1 ). Cette modification structurale du LiFePO₄ entraîne une amélioration remarquable de la conductivité électrique du matériau.

Le matériau d'électrode selon l'invention présente une densité DRX d'environ 3,6 g/cm³.

Dans une forme de réalisation avantageuse du matériau d'électrode selon l'invention, la teneur en carbone résiduel est strictement comprise entre 1 et 3% en poids par rapport au poids total du matériau d'électrode.

La présente invention a donc en outre permis d'obtenir un matériau d'électrode présentant une teneur en carbone réduite tout en permettant d'atteindre des performances électriques particulièrement avantageuses, semblables à celles obtenues par exemple dans l'art antérieur avec des teneurs en carbone plus élevées, entre autres, de par l'utilisation d'un temps de calcination réduit qui demande forcément une utilisation de carbone en temps qu'inhibiteur de croissance cristalline moindre. En effet, le carbone est utilisé à deux fins dans une calcination. Tout d'abord, il sert d'inhibiteur de croissance cristalline et ensuite, il permet d'améliorer la capacité spécifique du matériau d'électrode. La réduction du temps de calcination avantageusement obtenue suivant le procédé selon l'invention réduit également la teneur en carbone nécessaire pour obtenir la capacité spécifique recherchée et permet donc d'obtenir une quantité supérieure de matière active que dans les procédés où la teneur en carbone est plus élevée. Dès lors, sans diminuer la teneur en matière active, la conduction électronique est améliorée.

De plus, par la teneur réduite en carbone de 1 à 3 % en poids, par rapport au poids total du matériau d'électrode, les grains de structure cristalline LiFe_{β}B_{γ}PO₄ sont enrobés de manière discontinue par du carbone et une partie du carbone peut également être dispersée au sein de la poudre principale.

Le matériau d'électrode selon l'invention présente à l'état final (après broyage et calcination) une densité tapée de 0,8 à 1,5 g/cm³ et de préférence environ 1,1 g/cm³.

Par les termes "densité tapée", au sens de la présente invention, on entend la densité apparente d'une poudre mesurée selon les normes ASTM B527, D4164 et D4164.

Avantageusement, le matériau d'électrode selon l'invention présente une surface spécifique mesurée selon la méthode BET qui vaut de 12 à 24 m²/g, de préférence de 16 à 22 m²/g, en particulier de 18 à 20 m²/g.

De préférence, le matériau d'électrode selon l'invention présente une taille moyenne (D50) d'agglomérats mesurée par granulométrie laser en voie aqueuse comprise entre 0,5 et 15 µm, et comprise de préférence entre 4 et 8 µm.

Avantageusement, le matériau d'électrode selon l'invention présente une capacité spécifique supérieure à 150 mAh/g et inférieure à 170 mAh/g.

D'autres formes de réalisation du matériau d'électrode sont décrites dans les revendications annexées. L'invention se rapporte également à une électrode de matériau composite de phosphate de fer lithié et de carbone, présentant à une capacité surfacique comprise entre 2 et 4 mAh/cm², et de préférence de l'ordre de 3 mAh/cm², une capacité spécifique pratique supérieure à 150 mAh/g et inférieure à 170 mAh/g

Comme on peut le constater, l'électrode présente une capacité surfacique particulièrement élevée, en particulier à cause de la densité élevée de la poudre composite obtenue à l'issue du broyage et des agrégats micrométriques de particules nanométriques, également obtenus à l'issue du broyage qui permettent d'atteindre des épaisseurs d'électrodes élevées. En conséquence de ceci, puisque la capacité spécifique est une fonction du produit de la densité de la poudre et de l'épaisseur des électrodes, il ressort clairement qu'obtenir des valeurs maximales pour ces deux grandeurs permet d'obtenir un optimum de capacité surfacique spécifique pour l'électrode selon l'invention.

Dans une autre forme de réalisation, l'électrode comprend en outre un ou plusieurs additifs conducteurs électroniques et un ou plusieurs liants organiques.

Avantageusement, ledit un ou plusieurs additifs conducteurs électroniques est choisi dans le groupe constitué des fibres de carbones, du noir de carbone, de nanotubes de carbone ou analogues.

De préférence, ledit matériau d'électrode est présent en une quantité allant de 80 à 92% en poids par rapport au poids total de l'électrode.

Avantageusement, ledit un ou plusieurs additifs conducteurs électroniques est présent en une quantité allant de 4 à 14 % en poids par rapport au poids total de l'électrode, de façon à assurer un compromis entre conductivité (de manière à assurer la percolation électronique) et densité de l'électrode : la présence de carbone diminue la densité, mais favorise l'obtention d'une bonne capacité pratique via l'amélioration de la conductivité. Dans une forme de réalisation préférentielle, ledit un ou plusieurs liants organiques est présent en une quantité allant de 4 à 10 % en poids par rapport au poids total de l'électrode.

De façon privilégiée, la porosité de l'électrode est comprise entre 50 et 25 %.

D'autres formes de réalisation de l'électrode selon l'invention sont mentionnées dans les revendications annexées.

La présente invention se rapporte également à une cellule électrochimique Li-ion comprenant une électrode selon l'invention ainsi qu'éventuellement, une électrode négative de carbone et un électrolyte conducteur des ions Li⁺.

La cellule électrochimique selon l'invention présente en outre avantageusement une densité d'énergie comprise entre 160 à 180 Wh/kg.

D'autres formes de réalisation de la cellule électrochimique selon l'invention sont indiquées dans les revendications annexées.

D'autres caractéristiques, détails et avantages de l'invention ressortiront de la description donnée ci-après, à titre non limitatif et en faisant référence aux dessins et aux exemples annexés.

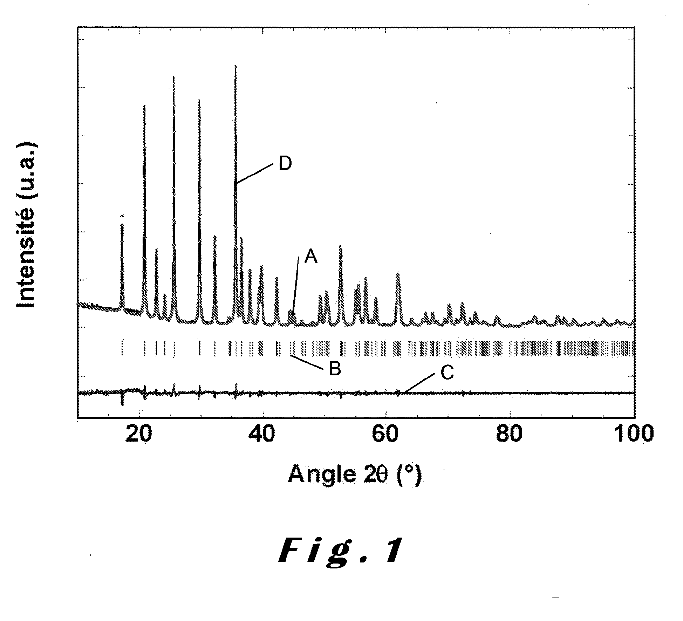

La figure 1 est un graphique représentant un diagramme de diffraction des rayons X (λ_{CuKα}) d'une poudre de LiFe_{0,95}B_{0,033}PO₄/C contenant 2,5 % en poids de carbone selon l'invention (A). Les symboles verticaux (B) correspondent aux positions de Bragg calculées pour le groupe d'espace Pnma et pour les paramètres de maille a = 10,326(3) Å, b = 6,006(2) Å et c = 4,695(2) Å. Les courbes (D) et (C) correspondent respectivement aux diagrammes simulés et à la différence entres les diagrammes expérimentaux et simulés.

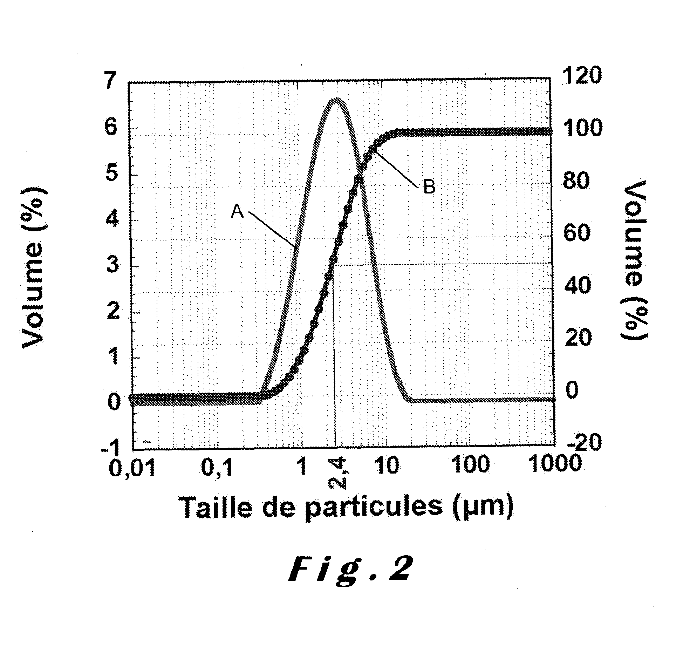

La figure 2 est un graphique représentant la répartition en taille des grains d'une poudre de LiFe_{0,95}B_{0,033}PO₄/C contenant 2,5 % en poids de carbone selon l'invention. L'analyse granulométrique a été réalisée par diffraction laser. La courbe (A) représente la fraction volumique pour chaque intervalle de taille de grains considéré. La courbe (B) représente la fraction volumique cumulée, et se lit de la gauche vers la droite.

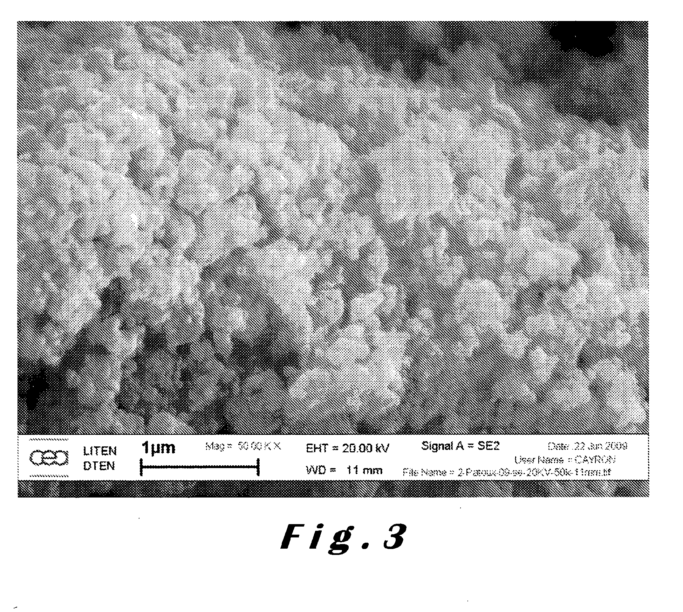

La figure 3 illustre un cliché d'une poudre de LiFe_{0,95}B_{0,033}PO₄/C contenant 2,5% en poids de carbone selon l'invention obtenu par microscopie électronique à balayage (MEB) en mode électrons rétrodiffusés.

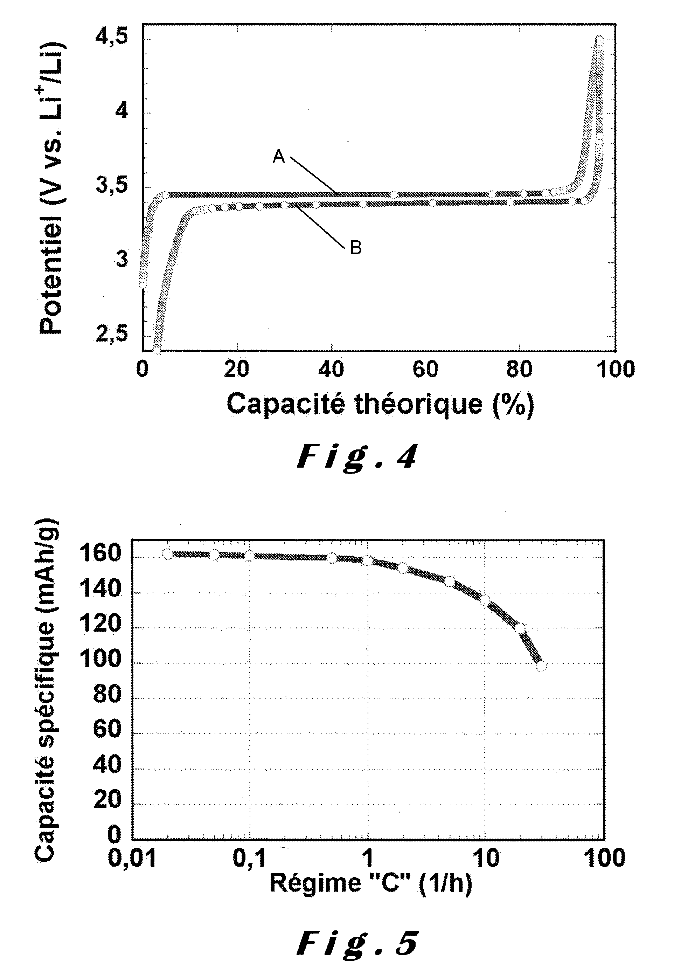

La figure 4 est un graphique représentant une courbe de charge/décharge en mode galvanostatique (régime de C/5 ; 20°C) d'une poudre de LiFe_{0,95}B_{0,033}PO₄/C contenant 2,5 % en poids de carbone selon l'invention. La capacité théorique du couple LiFePO₄/FePO₄ est de 170 mAh/g. Le carbone présent dans le composite LiFePO₄/C abaisse cette valeur de quelques milli-ampères-heures par gramme.

La figure 5 représente l'évolution de la capacité spécifique d'une poudre de LiFe_{0,95}B_{0,033}PO4/C contenant 2,5 % en poids de carbone selon l'invention en fonction du régime de décharge imposé.

Sur les figures, les éléments identiques ou analogues portent les mêmes références.

Comme on l'a mentionné précédemment, la présente invention porte sur un procédé de synthèse d'un composite LiFePO₄/C optimisé permettant l'élaboration d'électrode épaisse, puis la fabrication d'accumulateurs Li-ion de densité d'énergie supérieure à 140 Wh/kg (140-180 Wh/kg).

Trois étapes majeures sont prévues pour l'obtention de la poudre de matériau d'électrode composite LiFePO₄/C. Cette poudre contient au moins 96 % en masse de LiFePO₄ et moins de 3% en masse de carbone. Le carbone est issu de la décomposition thermique de la cellulose. Les trois étapes majeures menant au composite LiFePO₄/C sont :
1. la synthèse en solution aqueuse du précurseur Fe₃(PO₄)₂,nH₂O (n~8),
2. l'activation mécanochimique permettant le mélange homogène du précurseur Fe₃(PO₄)₂,nH₂O (n~8) avec Li₃PO₄ et de la cellulose, par un broyage à bille à haute énergie dans lequel la vitesse relative des particules est supérieure à 4m/s de façon à conférer au mélange de précurseurs une énergie d'activation mécanique suffisante pour obtenir des agrégats mixtes micrométriques de particules nanométriques. De préférence, la vitesse relative des particules est supérieure à 8 m/s.
3. le traitement thermique rapide sous atmosphère contrôlée (inerte).

La capacité théorique du phosphate de fer lithié LiFePO₄ est de 170 mAh/g. Le potentiel de fonctionnement du système LiFePO₄/FePO₄ (3,45 V vs. Li⁺/Li) et la masse volumique (3,5 kg/L) sont plus faibles que pour LiCoO₂/Li₀,₄₅CoO₂(~ 4,0 V vs. Li⁺/Li et 5,0 kg/L). En revanche, le phosphate de fer présente un coût intrinsèque très faible, une durée de vie en cyclage très importante (c'est-à-dire le nombre de cycle de charge et décharge sans perte significative sachant que 20 % en moins de la capacité initiale est souvent retenue comme étant une valeur de perte significative) de capacité et une composante sécurité nettement supérieure à celle des oxydes lamellaires, particulièrement à l'état chargé (grande réactivité thermique et chimique de LiₓCoO₂ 0 ≤ x ≤ 1). Le procédé de synthèse du matériau composite d'électrode LiFePO₄/C selon la présente invention fait intervenir plusieurs étapes successives dont une étape d'activation mécanochimique particulièrement peu énergivore en comparaison des étapes de broyage/activation mécanochimique conventionnelle. Cette voie de synthèse, optimisée à différentes échelles (laboratoire, prototypage, préindustrielle), permet la préparation de composite LiFePO₄/C adapté à la réalisation d'électrode épaisse et de cellule Li-ion de grande densité d'énergie massique (140 à 180 Wh/kg) en fournissant un matériau composite d'électrode présentant une densité élevée due à une finesse de grain nanométrique et une formation d'agrégats micrométriques à l'issue du broyage.

La première étape de la synthèse consiste à préparer un précurseur de fer (II) selon la réaction suivante (ou une réaction similaire employant d'autres réactifs) :

NaOH + 2(NH₄)₂HPO₄ + 3FeSO₄•7H₂O→ Fe₃(PO₄)₂•8H₂O

Ce phosphate de fer (II) synthétique, de composition Fe₃(PO₄)₂•8H₂O s'apparente au minéral vivianite. II est obtenu par précipitation en solution aqueuse selon une réaction en condition stoechiométrique entre les ions Fe²⁺ et les espèces PO₄⁻³ (exemple de réalisation 1)

La seconde étape de la synthèse fait intervenir un broyage du précurseur de fer ainsi préparé, d'une source de lithium, et d'une source de carbone, selon la réaction générale suivante :

Fe₃(PO₄)₂•8H₂O + Li₃PO₄ + Cellulose → "mélange homogène des réactifs"

Cette seconde étape consiste en une activation mécanochimique des différents précurseurs, lesquels formeront après traitement thermique le composite LiFePO₄/carbone désiré (Exemple de réalisation 2).

La troisième étape consiste à effectuer un traitement thermique rapide (de l'ordre de 15 à 30 minutes) des précurseurs sous atmosphère inerte (argon) afin de former le composite LiFePO₄/C. La température est généralement comprise entre 550 et 650°C. La réaction globale mise en jeu est la suivante:

Fe₃(PO₄)₂•8H₂O + Li₃PO₄ + Cellulose → 3LiFePO₄/C(~97/3 en masse) + eau + aldéhydes + autres produits de dégradation de la cellulose

Suite à l'obtention de la poudre désirée, des électrodes à base de LiFePO₄ peuvent être réalisées. Leur élaboration met en oeuvre la dite poudre, un ou plusieurs additifs conducteurs électroniques (fibres de carbones, noir de carbone,...) et un liant organique. Les proportions respectives sont généralement de l'ordre de 80 à 92%, 4 à 14%, et 4 à 10% en masse. Le grammage (ou capacité surfacique) de l'électrode varie, selon l'application, de 2 à 4 mAh/cm², et sa porosité est comprise entre 50 et 25 %.

L'association d'une telle électrode avec une électrode négative de carbone et un électrolyte conducteur des ions Li⁺ permet de réaliser tout type de cellule Li-ion de format (pile bouton, cellule prismatique, cellule cylindrique,...) et de capacité (de quelques milli-Ampères-heures à plusieurs dizaines d'Ampères-heures) souhaitée. La densité d'énergie des cellules ainsi assemblée peut atteindre 160 à 180 Wh/kg.

### EXEMPLES.-

### Exemple 1.- formation du phosphate de fer (II)

Deux litres d'eau déionisée sont placés sous agitation magnétique dans un bécher à température ambiante. L'oxygène de l'eau est éliminé par bullage d'argon à travers un fritté. Ce bullage est entamé au moins 15 minutes avant l'introduction des réactifs, et est maintenu tout au long de la synthèse.

Ensuite, 20,01 grammes d'hydroxyde de sodium (NaOH) sont dissous dans ces 2 L d'eau. Lorsque la dissolution est complète, 66,84 grammes d'hydrogénophosphate de diammonium ((NH₄)₂HPO₄) sont ajoutés et dissous dans le milieu réactionnel. Le pH est alors d'environ 11.

211,14 grammes de sulfate de fer (II) finement divisé (FeSO₄,7H₂O) sont ajoutés progressivement à la solution précédente, en maintenant l'agitation. Un précipité gris clair commence à se former. Une fois l'addition de sulfate de fer achevée, le milieu est maintenu sous agitation et bullage d'argon pendant 16h.

Le bullage et l'agitation sont ensuite stoppés afin de laisser le précipité se déposer au fond du bécher. La phase liquide est retirée. Le précipité est ensuite lavé à l'eau distillée et centrifugé: la pâte contenant le précipité est introduite dans des tubes en verre de 100 mL et centrifugée afin de bien séparer le précipité de la phase liquide (50-80 mL d'eau déionisée et désoxygénée sont préalablement introduits dans chaque tubes et placée sont agitation). L'opération est répétée au moins deux fois supplémentaires. Le précipité est rincé une dernière fois, avec de l'acétone. Finalement, le précipité est séché sous vide dynamique (Büchi,....): dans un premier temps, le vide est effectué à température ambiante durant 1 h, puis on chauffe à 60°C pendant 16 h en maintenant le vide. Le produit obtenu a pour composition Fe₃(PO₄)₂,nH₂O (n~8). II est de couleur bleue. d'oxygène au cours du broyage. A l'extérieur de la boite à gants, le bol est placé sur un broyeur à haute énergie Simoloyer®, disponible auprès de la société Zoz Gmbh.

Le broyage est démarré, la vitesse de rotation est de +400/- 400 tours par minute dans le but de réaliser un broyage énergétique. La durée effective du broyage est de 1 h, effectuée en 4 cycles de 15 min espacés par une pause de 5 min pour limiter l'échauffement des bols, dont le refroidissement par air est insuffisant pour broyer sans interruptions. Le bol est ensuite introduit à nouveau en boîte à gants. La poudre broyée est récupérée. Les précurseurs de synthèse sont maintenant activés (mélange intime nanostructuré). La poudre peut être stockée sous argon en attendant d'être traitée thermiquement.

Pour effectuer le traitement thermique de calcination ou pyrolyse, 2 g de la poudre activée mécanochimiquement par le broyage sont introduits dans une nacelle en or, laquelle est placée dans un tube en quartz scellé (volume intérieur de 440 mL - diamètre extérieur de 30 mm, longueur de 500 mm). A l'extérieur de la boîte à gants, le tube en quartz est introduit pendant 15 min dans un four déjà préchauffé à 600°C. Le tube est ensuite sorti du four (∼ trempe à l'air). Ainsi, la poudre atteint très rapidement la température de synthèse est n'y reste qu'un court instant. Une fois refroidie, la poudre est récupérée sous air et stockée après reconditionnement sous argon. Le composite LiFePO₄/C est formé. Il contient moins de 3% en poids de carbone par rapport au poids total du matériau composite d'électrode. La phase LiFePO₄ est parfaitement cristallisée. La taille moyenne des agrégats est de 2,4 µm.

Ces agrégats sont constitués d'un assemblage micrométrique compact de nanoparticules.

C'est cette forte compacité qui permet d'atteindre la densité requise pour la formation ultérieure de l'électrode.

### Exemple 3.- Formation d'un accumulateur lithium-métal

Un accumulateur lithium-métal de type "pile bouton" est construit avec
- une électrode négative (anode) de lithium (16 mm de diamètre, 130 µm d'épaisseur) déposé sur un disque de nickel servant de collecteur de courant,
- une électrode positive (cathode) constituée d'un disque de 14 mm de diamètre prélevée sur un film composite de 25 µm d'épaisseur comprenant le matériau de l'invention préparé selon l'exemple 2 (80 % en masse), de noir de carbone (10 % en masse) en guise de matériau conducteur et de l'hexafluorure de polyvinylidène (10 % en masse) en guise de liant, le tout étant déposé sur un collecteur de courant en aluminium (feuille de 20 micromètre d'épaisseur),
- un séparateur imbibé d'un l'électrolyte liquide à base du sel LiPF₆ (1mol/L) en solution dans un mélange de carbonate d'éthylène et de carbonate de diméthyle.

A température ambiante, sous un régime de C/5 (C représentant la charge ou la décharge et 5 le nombre d'heures). Ce système délivre une capacité d'environ 160 mAh/g et une tension moyenne de 3,4 V.

### Exemple 4.- Formation d'un accumulateur Li-ion

Un accumulateur Li-ion a été construit à partir d'une électrode positive contenant le composite LiFePO₄/C de l'invention, d'une électrode négative de carbone et d'un séparateur commercial à base de polypropylène et de polyéthylène imbibé d'électrolyte liquide constitué de LiPF₆ (1 mol.L-¹) en solution dans un mélange de carbonate de propylène, de carbonate de diméthyle et de carbonate d'éthylène.

En particulier, l'électrode positive est composée de 90% en masse de LiFePO₄/C, 4% en masse de carbone (fibres de carbone et noir de carbone en proportions identiques) et de 6% en masse d'hexafluorure de polyvinylidène en guise de liant. Le mélange est effectué en solution de N-méthylpyrrolidone. L'encre formée est déposée sur un collecteur de courant en aluminium de telle sorte que la capacité surfacique soit de 3,8 mAh/cm². Après évaporation du solvant, l'électrode est calandrée pour atteindre une porosité de 35%.

A température ambiante, cet accumulateur possède une énergie nominale pouvant dépasser 160 Wh/kg.

## Revendications

1. Procédé de fabrication d'un matériau composite de phosphate de fer lithié et de carbone comprenant les étapes de
- formation d'un mélange de précurseurs contenant au moins du phosphate de lithium, du phosphate de fer (II) et d'une matière contenant du carbone, sous atmosphère inerte,
- un broyage dudit mélange de précurseurs obtenu et
- une calcination dudit mélange broyé pendant lequel se produisent la pyrolyse de la matière contenant du carbone et la formation de cristaux de phosphate de fer lithié
**caractérisé en ce que** ledit broyage est un broyage à billes à haute énergie avec obtention d'agrégats mixtes micrométriques de particules nanométriques, dans lesquels les agrégats présentent une taille moyenne (D50) mesurée par granulométrie laser comprise entre 0,5 et 15 µm et dans lesquels les particules présentent une taille maximale mesurée par microscopie en transmission inférieure à 50 nm , la vitesse relative maximale des billes dudit broyage à billes à haute énergie étant supérieure à 4 m/s, et **en ce que** le broyage présente une durée de moins de deux heures.

2. Procédé selon la revendication 1, dans laquelle le broyage à haute énergie est un broyage dans lequel la vitesse relative des billes est supérieure à 6 m/s.

3. Procédé selon la revendication 1 ou la revendication 2, dans laquelle ladite étape de broyage présente une durée de moins d'une heure.

4. Procédé selon l'une quelconque des revendications 1 à 3, dans lequel ladite étape de broyage est réalisée pendant moins d'une demi-heure.

5. Procédé selon la revendication 4, dans lequel ladite étape de broyage est réalisée pendant environ 15 minutes.

6. Procédé selon l'une quelconque des revendications 1 à 5, dans lequel ladite étape de calcination présente une durée de moins de 2 heures.

7. Procédé selon l'une quelconque des revendications 1 à 6, dans lequel ledit mélange de précurseurs contient aussi du phosphate de bore et dans lequel ledit matériau composite de phosphate de fer lithié et de carbone est un matériau composite de phosphate de fer lithié dopé au bore et de carbone.

8. Procédé selon la revendication 7, comprenant en outre un dégazage de l'eau par barbotage d'argon et une mise sous atmosphère inerte de l'équipement utilisé.

9. Procédé selon l'une quelconque des revendications précédentes, dans lequel ledit broyage s'effectue également en atmosphère inerte (argon).

10. Procédé selon l'une quelconque des revendications précédentes, dans lequel la calcination est effectuée sous atmosphère inerte d'argon.

11. Procédé selon l'une quelconque des revendications précédentes, dans lequel ladite matière contenant du carbone est de la cellulose.

12. Matériau d'électrode obtenu suivant le procédé selon l'une quelconque des revendications 1 à 11 présentant la formule suivante Li_{α}Fe_{β}B_{γ}PO₄/C dans laquelle 0,85 ≤ α ≤ 1,08, 0 ≤ γ/β ≤ 0,1 et γ + β ≤1, permettant, à une capacité surfacique inférieure à 2 mAh/cm², de fournir une capacité spécifique pratique d'électrode comprise entre 150 et 170 mAh/g, et, à une capacité surfacique comprise entre 2 et 4 mAh/cm², de fournir une capacité spécifique pratique d'électrode supérieure à 150 mAh/g, sous forme d'énergie avec obtention d'agrégats mixtes micrométriques de particules nanométriques, dans lesquels les agrégats présentent une taille moyenne (D50) mesurée par granulométrie laser comprise entre 0,5 et 15 µm et dans lesquels les particules présentent une taille maximale mesurée par microscopie en transmission inférieure à 50 nm.

13. Matériau d'électrode selon la revendication 12, présentant la formule suivante LiFe_{β}B_{γ}PO₄/C dans laquelle γ + β <1, en particulier LiFe_{0,95}B_{0,033}PO₄/C.

14. Matériau d'électrode selon la revendication 12 ou la revendication 13, dans lequel la teneur en carbone résiduel est strictement comprise entre 1 et 3% en poids par rapport au poids dudit matériau d'électrode,. sous forme d'énergie avec obtention d'agrégats mixtes micrométriques de particules nanométriques, dans lesquels les agrégats présentent une taille moyenne (D50) mesurée par granulométrie laser comprise entre 0,5 et 15 µm et dans lesquels les particules présentent une taille maximale mesurée par microscopie en transmission inférieure à 50 nm.

15. Matériau d'électrode selon l'une quelconque des revendications 12 à 14, dans lequel la densité tapée vaut entre 0,8 et 1,5g/cm³.

16. Matériau d'électrode selon l'une quelconque des revendications 12 à 15, dans lequel la surface spécifique mesurée selon la méthode BET vaut de 12 à 24 m²/g.

17. Electrode comprenant ledit matériau d'électrode selon l'une quelconque des revendications 12 à 16.

18. Electrode selon la revendication 17, comprenant en outre un ou plusieurs additifs conducteurs électroniques est choisis dans le groupe constitué des fibres de carbones, du noir de carbone, de nanotubes de carbone et analogues.

19. Electrode selon la revendication 17 ou 18, dans laquelle ledit matériau d'électrode est présent en une quantité allant de 80 à 92 % en poids par rapport au poids total de l'électrode.

20. Electrode selon l'une quelconque des revendications 17 à 19, dans laquelle ledit un ou plusieurs additifs conducteurs électroniques est présent en une quantité allant de 4 à 14 % en poids par rapport au poids total de l'électrode.

21. Electrode selon l'une quelconque des revendications 17 à 20, comprenant en outre un ou plusieurs liants organiques présent en une quantité allant de 4 à 10 % en poids par rapport au poids total de l'électrode.

22. Electrode selon l'une quelconque des revendications 17 à 21, présentant une porosité comprise entre 50 et 25 %.

23. Cellule électrochimique Li-ion comprenant une électrode selon l'une quelconque des revendications 17 à 22.

24. Cellule électrochimique selon la revendication 23, comprenant en outre une électrode négative de carbone et un électrolyte conducteur des ions Li⁺.

25. Cellule électrochimique selon la revendication 23 ou la revendication 24, presentant une densité d'énergie massique comprise entre 160 à 180 Wh/kg.

## Patentansprüche

1. Verfahren zur Herstellung eines Verbundwerkstoffs aus Lithiumeisenphosphat und Kohlenstoff, das folgende Schritte aufweist:
- Bilden einer Vorläuferverbindung, die mindestens Lithiumphosphat, Eisenphosphat (II) und ein kohlenstoffhaltiges Material enthält, in inerter Atmosphäre,
- ein Mahlen der erhaltenen Vorläuferverbindung und
- ein Kalzinieren der gemahlenen Vorläuferverbindung, bei dem die Pyrolyse des kohlenstoffhaltigen Materials und das Bilden von Lithiumeisenphosphat-Kristallen auftreten,
**dadurch gekennzeichnet, dass** das Mahlen ein Hochenergie-Kugelmahlen ist, bei dem mikrometrische Mischaggregate von nanometrischen Partikeln erhalten werden, wobei die Aggregate eine mittlere Größe (D50) aufweisen, die durch Laser-Granulometrie gemessen ist, die zwischen 0,5 und 15 µm liegt, und wobei die Partikel eine maximale Größe aufweisen, die durch Transmissionsmikroskopie gemessen ist, die kleiner als 50 nm ist, wobei die maximale relative Geschwindigkeit der Kugeln des Hochenergie-Kugelmahlens höher als 4 m/s ist und das Mahlen weniger als 2 Stunden dauert.

2. Verfahren nach dem Anspruch 1, wobei das Hochenergie-Kugelmahlen ein Mahlen ist, bei dem die relative Geschwindigkeit der Kugeln größer als 6 m/s ist.

3. Verfahren nach dem Anspruch 1 oder 2, wobei der Schritt des Mahlens mindestens eine Stunde dauert.

4. Verfahren nach einem der Ansprüche 1 bis 3, wobei der Schritt des Mahlens in weniger als einer halben Stunde durchgeführt wird.

5. Verfahren nach dem Anspruch 4, wobei der Schritt des Mahlens in ungefähr 15 Minuten durchgeführt wird.

6. Verfahren nach einem der Ansprüche 1 bis 5, wobei der Schritt des Kalzinierens mindestens 2 Stunden dauert.

7. Verfahren nach einem der Ansprüche 1 bis 6, wobei die Vorläuferverbindung auch Borphosphat enthält und wobei der Verbundwerkstoff aus Lithiumeisenphosphat und Kohlenstoff ein Verbundwerkstoff aus Lithiumeisenphosphat, das mit Bor dotiert ist, und Kohlenstoff ist.

8. Verfahren nach dem Anspruch 7, ferner umfassend ein Entgasen des Wassers durch Einleiten von Argon und ein Setzen der verwendeten Ausrüstung unter inerte Atmosphäre.

9. Verfahren nach einem der vorhergehenden Ansprüche, wobei das Mahlen ebenfalls in inerter Atmosphäre (Argon) durchgeführt wird.

10. Verfahren nach einem der vorhergehenden Ansprüche, wobei das Kalzinieren in inerter Argonatmosphäre durchgeführt wird.

11. Verfahren nach einem der vorhergehenden Ansprüche, wobei das Kalzinieren in inerter Argonatmosphäre durchgeführt wird.

12. Elektrodenmaterial, das nach dem Verfahren nach einem der Ansprüche 1 bis 11 erhalten ist, das die folgende Formel aufweist Li_{α}Fe_{β}B_{γ}PO₄/C, wobei 0,85 ≤ α ≤ 1,08, 0 ≤ γ/β ≤ 0,1 und γ + β ≤ 1 ist, wobei bei einer Oberflächenkapazität unter 2 mAh/cm² eine spezifische praktische Elektrodenkapazität zwischen 150 und 170 mAh/g und bei einer Oberflächenkapazität zwischen 2 und 4 mAh/cm² eine spezifische praktische Elektrodenkapazität von über 150 mAh/g in Form von Energie mit Erhalten von mikrometrischen Mischaggregaten von Nanopartikeln geliefert werden kann, wobei die Aggregate eine mittlere Größe (D50) aufweisen, die durch Laser-Granulometrie gemessen ist, die zwischen 0,5 und 15 µm liegt, und wobei die Partikel eine maximale Größe aufweisen, die durch Transmissionsmikroskopie gemessen ist, die kleiner als 50 nm ist.

13. Elektrodenmaterial nach dem Anspruch 12, das die folgende Formel LiFe_{β}B_{γ}PO₄/C aufweist, wobei γ + β < 1 ist, insbesondere LiFe_{0,95}B_{0,033}PO₄/C.

14. Elektrodenmaterial nach dem Anspruch 12 oder 13, wobei der Restkohlenstoffgehalt streng zwischen 1 und 3 Gew.-% bezogen auf das Gewicht des Elektrodenmaterials in Form von Energie mit Erhalten von mikrometrischen Mischaggregaten von Nanopartikeln liegt, wobei die Aggregate eine mittlere Größe (D50) aufweisen, die durch Laser-Granulometrie gemessen ist, die zwischen 0,5 und 15 µm liegt, und wobei die Partikel eine maximale Größe aufweisen, die durch Transmissionsmikroskopie gemessen ist, die kleiner als 50 nm ist.

15. Elektrodenmaterial nach einem der Ansprüche 12 bis 14, wobei die Klopfdichte zwischen 0,8 und 1,5 g/cm³ beträgt.

16. Elektrodenmaterial nach einem der Ansprüche 12 bis 15, wobei die nach dem BET-Verfahren gemessene spezifische Oberfläche von 12 bis 24 m²/g beträgt.

17. Elektrode, die das Elektrodenmaterial nach einem der Ansprüche 12 bis 16 umfasst.

18. Elektrode nach dem Anspruch 17, die ferner einen oder mehrere elektronische Zusatzleiter umfassen, die aus der Gruppe, die aus Kohlenstofffasern, schwarzem Kohlenstoff, Kohlenstoffnanoröhren und dergleichen besteht, ausgewählt sind.

19. Elektrode nach dem Anspruch 17 oder 18, wobei das Elektrodenmaterial in einer Menge von 80 bis 92 Gew.-% bezogen auf das Gesamtgewicht der Elektrode vorhanden ist.

20. Elektrode nach einem der Ansprüche 17 bis 19, wobei ein oder mehrere elektronische Zusatzleiter in einer Menge von 4 bis 14 Gew.-% bezogen auf das Gesamtgewicht der Elektrode vorhanden ist/sind.

21. Elektrode nach einem der Ansprüche 17 bis 20, die ferner ein oder mehrere organische Bindemittel umfasst, die in einer Menge von 4 bis 10 Gew.-% bezogen auf das Gesamtgewicht der Elektrode vorhanden ist/sind.

22. Elektrode nach einem der Ansprüche 17 bis 21, die eine Porosität von zwischen 50 und 25% aufweist.

23. Elektrochemische Lithium-lonen-Zelle, umfassend eine Elektrode nach einem der Ansprüche 17 bis 22.

24. Elektrochemische Zelle nach dem Anspruch 23, die ferner eine negative Kohlenstoffelektrode und einen Li⁺-ionenleitenden Elektrolyten umfasst.

25. Elektrochemische Zelle nach dem Anspruch 23 oder 24, die eine Masse-Energiedichte aufweist, die zwischen 160-180 Wh/kg liegt.

## Claims

1. A method for manufacturing a composite material based on lithiated iron phosphate and on carbon comprising the steps of
- forming a mixture of precursors containing at least lithium phosphate, iron(II) phosphate and a material containing carbon, under an inert atmosphere,
- milling said obtained mixture of precursors and
- calcining said milled mixture during which pyrolysis of the material containing carbon and formation of lithiated iron phosphate crystals occur,
**characterized in that** said milling is high-energy ball milling with the obtaining of micrometric mixed aggregates of nanometric particles, wherein the aggregates have an average size (D50) measured by laser granulometry comprised between 0.5 and 15 µm and wherein the particles have a maximum size measured by transmission microscopy of less than 50 nm, the maximum relative velocity of the balls of said high-energy ball milling being greater than 4 m/s, and **in that** the milling has a duration of less than two hours.

2. The method according to claim 1, wherein the high-energy milling is milling wherein the relative velocity of the balls is greater than 6 m/s.

3. The method according to claim 1 or claim 2, wherein said milling step has a duration of less than one hour.

4. The method according to any of claims 1 to 3, wherein said milling step is performed for less than half an hour.

5. The method according to claim 4, wherein said milling step is performed for about 15 minutes.

6. The method according to any of claims 1 to 5, wherein said calcination step has a duration of less than 2 hours.

7. The method according to any of claims 1 to 6, wherein said mixture of precursors also contains boron phosphate and wherein said composite material of lithiated iron phosphate and carbon is a composite material based on lithiated iron phosphate doped with boron and on carbon.

8. The method according to claim 7, further comprising degassing of water by argon bubbling and setting the equipment used under an inert atmosphere (argon).

9. The method according to any of the preceding claims, wherein said milling is also carried out in an inert atmosphere (argon).

10. The method according to any of the preceding claims, wherein calcination is carried out under an inert argon atmosphere.

11. The method according to any of the preceding claims, wherein said material containing carbon is cellulose.

12. An electrode material obtained following the method according to any of claims 1 to 11, having the following formula Li_{α}Fe_{β}B_{γ}PO₄/C wherein 0.85 ≤ α ≤ 1.08, 0 ≤ γ/βα ≤ 0.1 and γ+β ≤ 1, giving the possibility, at a surface capacity of less than 2 mAh/cm², of providing a practical specific electrode capacity comprised between 150 and 170 mAh/g, and, at a surface capacity comprised between 2 and 4 mAh/cm², of providing a practical specific electrode capacity of more than 150 mAh/cm² in the form of energy with the obtaining of micrometric mixed aggregates of nanometric particles, wherein the aggregates have an average size (D50) measured by laser granulometry comprised between 0.5 and 15 µm and wherein the particles have a maximum size measured by transmission microscopy of less than 50 nm.

13. The electrode material according to claim 12, having the following formula LiFe_{β}B_{γ}PO₄/C wherein γ+β < 1, in particular LiFe_{0.5}B_{0.033}PO₄/C.

14. The electrode material according to claim 12 or claim 13, wherein the residual carbon content is strictly comprised between 1 and 3% by weight based on the weight of said electrode material, in the form of energy with the obtaining of micrometric mixed aggregates of nanometric particles, wherein the aggregates have an average size (D50) measured by laser granulometry comprised between 0.5 and 15 µm and wherein the particles have a maximum size measured by transmission microscopy of less than 50 nm.

15. The electrode material according to any of claims 12 to 14, wherein the tapped density has a value between 0.8 and 1.5 g/cm³.

16. The electrode material according to any of claims 12 to 15, wherein the specific surface area measured by the BET method has a value from 12 to 24 m²/g.

17. An electrode comprising said electrode material according to any of claims 12 to 16.

18. The electrode according to claim 17, further comprising one or several electron conducting additives selected from the group consisting of carbon fibers, carbon black, carbon nanotubes and the like.

19. The electrode according to claims 17 or 18, wherein said electrode material is present in an amount ranging from 80 to 92% by weight based on the total weight of the electrode.

20. The electrode according to any of claims 17 to 19, wherein said one or several electron conducting additives are present in an amount ranging from 4 to 14% by weight based on the total weight of the electrode.

21. The electrode according to any of claims 17 to 20, further comprising one or several organic binders present in an amount ranging from 4 to 10% by weight based on the total weight of the electrode.

22. The electrode according to any of claims 17 to 21, having porosity comprised between 50 and 25%.

23. A Li-ion electrochemical cell comprising an electrode according to any of claims 17 to 22.

24. The electrochemical cell according to claim 23, further comprising a negative carbon electrode and a Li+ ion conducting electrolyte.

25. The electrochemical cell according to claim 23 or claim 24, having a bulk energy density comprised between 160 and 180 Wh/kg.
